(19) Europäisches Patentamt
European Patent Office
Office européen des brevets

(11) EP 2 028 845 A2

# (12) EUROPEAN PATENT APPLICATION

(43) Date of publication:
**25.02.2009 Bulletin 2009/09**

(51) Int Cl.:
***H04N 5/33*** *(2006.01)*

(21) Application number: **08161964.5**

(22) Date of filing: **07.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **23.08.2007 JP 2007217350**

(71) Applicant: **Omron Corporation**
**Kyoto-shi, Kyoto 600-8530 (JP)**

(72) Inventors:
- **Ota, Shunji**
**c/o OMRON CORPORATION**
**Kyoto-shi**
**Kyoto 600-8530 (JP)**
- **Tamahana, Hajime**
**c/o OMRON CORPORATION**
**Kyoto-shi**
**Kyoto 600-8530 (JP)**
- **Omoto, Yasumichi**
**c/o OMRON CORPORATION**
**Kyoto-shi**
**Kyoto 600-8530 (JP)**

(74) Representative: **Brykman, Georges et al**
**Osha Liang**
**32 avenue de l'Opéra**
**75002 Paris (FR)**

## (54) Image pickup device and image pickup control method

(57) An image in which a shade of a driver's face is certainly suppressed is to be obtained, while suppressing increases in a size and an electric power consumption of an illumination. An illumination pulse-lights an illumination light which is an infrared light whose peak wavelength is 940 nm, under a control of a synchronous control section. The illumination light is irradiated to a driver through a polarizing filter and a visible light interruption filter. Reflex lights of the illumination light and a disturbance light, which were reflected by the driver, enter to an infrared BPF, in which a center wavelength is 940 nm, through the visible light interruption filter, a polarizing filter 34 and an optical lens. An image pickup element image-picks-up a light which transmitted through the infrared BPF. A synchronous control section controls such that a lit term of the illumination synchronizes with an exposure time of the image pickup element. The present invention can be applied, e.g., to a monitoring device of the driver.

FIG. 13

21
261
42
43
44
252A
252
41
32R
251R
251L
31
33
34
32L
32R
34
32L

EP 2 028 845 A2

## Description

BACKGROUND OF THE INVENTION

1. Field of the Invention

The present invention relates to an image pickup device and an image pickup control method, and relates especially to an image pickup device and an image pickup control method, which are used in an image pickup of a driver in a vehicle.

2. Description of Related Art

In recent years, in order to prevent an accident by a side look or a sleep in a sitting position, there is advanced a development in a monitoring device which monitors the driver by image-picking-up a face of the driver driving the vehicle, and applying a predetermined image processing to an image-picked-up image (hereafter, called a driver image as well).

By the way, a light environment in a vehicle chamber during running always fluctuates by a light (hereafter, called a disturbance light), such as sunlight, street lamp and store's illumination in roadside, which enters from a vehicle outside. There is a case where, by this disturbance light, such phenomena occur that a deep shadow generates in the driver' s face, a white spot occurs in the driver image by a light quantity excess, and the light directly irradiates the image pickup device and thus hinders the image pickup, thereby bringing about a decrease in a performance of the image processing of the driver image.

Among these phenomena, in order to suppress the generation of the shadow of the driver' s face, it is considered to irradiate the illumination to the driver's face. In this case, although it is necessary to irradiate a light more intensive than the sunlight which is one of the disturbance lights, if the light more intensive than the sunlight is irradiated, there is a fear that such adverse effects are exerted that the driver is dazzled, and an injury is given to an eye of the driver.

Whereupon, hitherto, there is proposed to image-pick-up the driver's face by possessing two kinds of light emitting diodes light-emitting respectively lights of a wavelength of 0.76 μm and a wavelength of 0.94 μm, in each of which an intensity of the sunlight attenuates large, and a filter through which the lights of these two kinds of the wavelengths transmit, and irradiating the light of the wavelength of 0.76 μm to the driver in a daytime and irradiating the light of the wavelength of 0.94 μm to the driver in a nighttime (e.g., refer to JP-A-2000-28315 (Patent Document 1)).

However, since the sunlight is very intensive, in order to obtain, in the invention described in the Patent Document 1, an image in which the shadow of the driver' s face is certainly suppressed, it is necessary to increase the number of the light emitting diodes and, as a result, a size and an electric power consumption of the illumination increase.

SUMMARY OF THE INVENTION

The present invention is one made in view of the situation like this, and is one making it possible to obtain the image in which the shadow of the driver' s face is certainly suppressed, while suppressing the increases in the size and the electric power consumption of the illumination.

An image pickup device in one aspect of the present invention includes a filter transmitting, among components of an entering light, a component near a wavelength of a peak of an illumination light irradiated to a subject, the wavelength being a wavelength in an infrared region in which an intensity of a sunlight becomes a predetermined threshold value or less and a minimum, or a wavelength near the former; an image pickup means image-picking-up the light which transmitted through the filter; and a synchronous control means pulse-lighting the illumination light, and controlling such that a term in which the illumination light is lit synchronizes with a term in which the image pickup means is exposed.

In the image pickup device in one aspect of the present invention, there is image-picked-up the light which transmitted through the filter transmitting, among components of the entering light, the component near the wavelength of the peak of the illumination light irradiated to the subject, the wavelength being the wavelength in the infrared region in which the intensity of the sunlight becomes the predetermined threshold value or less and the minimum, or the wavelength near the former, the illumination light is pulse lit, and there is controlled such that the term in which the illumination light is lit synchronizes with the term in which the image pickup means is exposed.

Accordingly, it is possible to obtain the image in which the shadow of the driver's face is certainly suppressed, while suppressing increases in the size and the electric power consumption of the illumination.

This illumination light is emitted, e.g., by an infrared LED (Light Emitting Diode). This filter is constituted, e.g., by an infrared band pass filter. This image pickup means is constituted, e.g., by a CMOS (Complementary Metal Oxide Semiconductor) or a CCD (Charge Coupled Device). This synchronous control means is constituted, e.g., by a CPU (Central Processing Unit).

This illumination light can be made an infrared light in which a wavelength longer than 935 nm in the vicinity of 935 nm is made the peak.

By this, it becomes possible to use an image pickup element having a good sensitivity in regard to a light whose wavelength is longer than 935 nm in the vicinity of 935 nm, and a filter transmitting the light whose wavelength is longer than 935 nm in the vicinity of 935 nm.

This control means additionally controls the image pickup means so as to image-pick-up alternately an image at a lit time of the illumination light and an image at an extinguished time and, in this image pickup device, there can be additionally provided a differential image generating means generating a differential image which is a difference between the image at the lit time of the illumination light and the image at the extinguished time.

By this, it is possible to obtain the image in which the shadow of the driver's face is more certainly suppressed.

This differential image generating means is constituted, e.g., by the CPU.

In this image pickup device, there can be additionally provided a pixel addition means dividing an image-picked-up image into regions of a predetermined size, and generating an image comprising a pixel in which there is added a pixel value of a pixel in the region.

By this, it is possible to make brighter a luminance of the image of the driver while suppressing an illuminance of the illumination.

This pixel addition means is constituted, e.g., by the CPU.

In this image pickup device, it is possible to provide an illumination irradiating the illumination light, a first polarizing means polarizing the illumination light irradiated to the subject, in a first direction, and a second polarizing means polarizing a light entering to the image pickup means, in a second direction approximately, perpendicularly intersecting with the first direction.

By this, it is possible to remove a component of the illumination light mirror-reflected by eyeglasses that the driver wears, and the like.

This illumination is constituted, e.g., by an infrared LED (Light Emitting Diode). These first polarizing means and second polarizing means are constituted, e.g., by a polarizing filter.

An image pickup control method in one aspect of the present invention includes, in an image pickup control method in an image pickup device including a filter transmitting, among components of an entering light, a component near a wavelength of a peak of an illumination light irradiated to a subject, the wavelength being a wavelength in an infrared region in which an intensity of a sunlight becomes a predetermined threshold value or less and a minimum, or a wavelength near the former, and an image pickup means image-picking-up the light which transmitted through the filter, a synchronous control step pulse-lighting the illumination light, and controlling such that a term in which the illumination light is lit synchronizes with a term in which the image pickup means is exposed.

In the image pickup control method in one aspect of the present invention, there is pulse-lit the illumination light in which, among components of the entering light, the wavelength in the infrared region in which the intensity of the sunlight becomes the predetermined threshold value or less and the minimum, or the wavelength near the former is made the peak, and there is controlled such that the term in which the illumination light is lit synchronizes with the term in which the image pickup means is exposed.

Accordingly, it possible to obtain the image in which the shadow of the driver's face is certainly suppressed, while suppressing the increases in the size and the electric power consumption of the illumination.

This illumination light is emitted, e.g., by the infrared LED (Light Emitting Diode). This image pickup means is constituted, e.g., by the CMOS (Complementary Metal Oxide Semiconductor) or the CCD (Charge Coupled Device). This filter is constituted, e.g., by the infrared band pass filter. This synchronous control step is constituted, e.g., by the synchronous control step pulse-lighting the illumination light, e.g., by the CPU, and controlling such that the term in which the illumination light is lit synchronizes with the term in which the image pickup means is exposed.

Like the above, according to one aspect of the present invention, it possible to obtain the image in which the shadow of the driver' s face is certainly suppressed, while suppressing the increases in the size and the electric power consumption of the illumination.

BRIEF DESCRIPTION OF THE DRAWINGS

Fig. 1 is a block diagram showing one embodiment of a monitoring system to which the present invention was applied.

Fig. 2 is a graph showing an example of a spectrum of a sunlight.

Fig. 3 is a graph showing an example of a spectrum of an artificial light.

Fig. 4 is a graph in which the spectrum of the sunlight was compared for every season.

Fig. 5 is a three-dimensional graph showing relations between a center wavelength and a half value breadth of an infrared BPF and a power of the sunlight after passing through the infrared BPF.

Fig. 6 is a graph in which the graph of Fig. 5 was denoted by a two-dimension.
Fig. 7 is a three-dimensional graph showing relations between the center wavelength and the half value breadth of the infrared BPF and a power of an LED light after passing through the infrared BPF.
Fig. 8 is a graph in which the graph of Fig. 7 was denoted by the two-dimension.
Fig. 9 is a graph schematically showing examples of relations between spectra of the sunlight and an illumination light and a transmission characteristic of the infrared BPF.
Fig. 10 is a view for explaining an action of a polarizing filter.
Fig. 11 is a diagram for explaining a principle removing or reducing a mirror-reflected component.
Fig. 12 is a graph showing an example of a characteristic of a visible light interruption filter.
Fig. 13 is an exploded view showing an example of a constitution of an image pickup device.
Fig. 14 is a diagram for explaining amonitoringprocessing implemented by a monitoring system.
Fig. 15 is a diagram for explaining about relations between a lit time and an electric power consumption of an illumination and a received light quantity of an image pickup element.
Fig. 16 is a diagram for explaining about examples of relations between a frame period and a shutter release time of the image pickup device and the lit time of the illumination.
Fig. 17 is a diagram for explaining about a differential processing.
Fig. 18 is a diagram for explaining about a pixel addition processing.

DESCRIPTION OF PREFERRED EMBODIMENTS

Hereunder, by referring to the drawings, there is explained about an embodiment of the present invention.

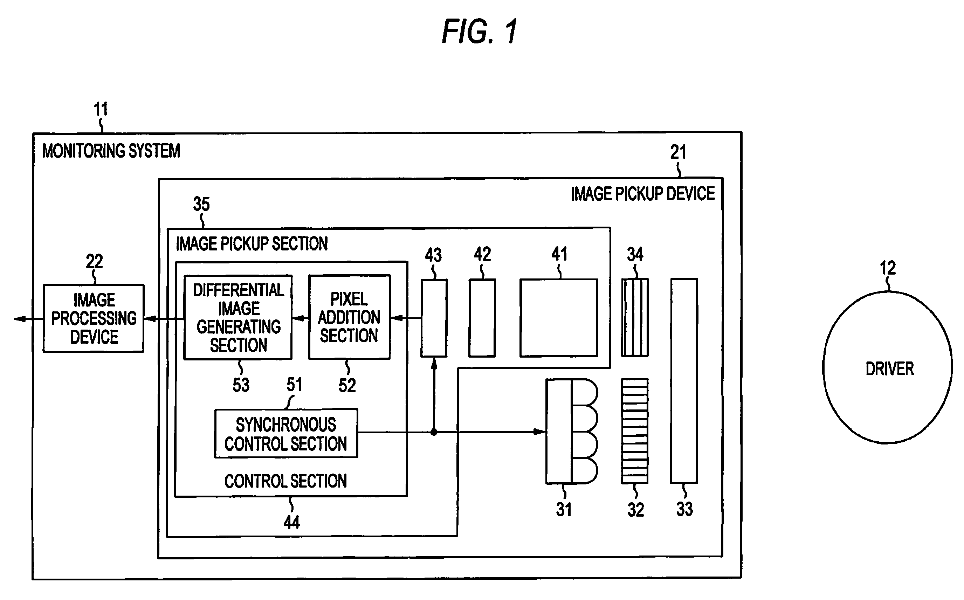

Fig. 1 is a block diagram showing one embodiment of a monitoring system to which the present invention was applied. A monitoring system 11 in Fig. 1 monitors a driver 12 driving a vehicle (hereafter, called own vehicle as well) in which there is provided the monitoring system 11, and performs a detection of, e.g., the side look, the sleep in siting position, or the like of the driver 12, and performs a certification of the driver 12. And, the monitoring system 11 outputs its result to a device in a post-stage. The monitoring system 11 is constituted so as to include an image pickup device 21 and an image processing device 22.

The image pickup device 21 image-picks-up the face of the driver 12 sitting on a driver's seat of the own vehicle from an approximately front direction while synchronizing with a flickering of an illumination 31, and takes a difference between an image image-picked-up at a lit time of the illumination 31 and an image image-picked-up at an extinguished time of the illumination 31. The image pickup device 21 supplies a differential image obtained as a result of the difference to the image processing device 22. Incidentally, hereafter, the image in which the driver was image-picked-up is called a driver image.

By performing, e.g., a predetermined image processing to the differential image, the image processing device 22 detects a direction of a line of sight, a direction of the face, an open degree of an eye, and the like of the driver 12, and extracts a characteristic quantity of the face, thereby performing the detection of the side look, the sleep in siting position, or the like of the driver 12, and performing the certification of the driver 12. And, the image processing device 22 outputs its result to the device in the post-stage.

The image pickup device 22 is constituted so as to include the illumination 31, a polarizing filter 32, a visible light interruption filter 33, a polarizing filter 34, and an image pickup section 35. Further, the image pickup section 35 is constituted so as to include an optical lens 41, an infrared band-pass filter (BPF) 42, an image pickup element 43, and a control section 44.

In a case where the illumination 31 is lit, an illumination light of the illumination 31 is polarized in a predetermined direction by the polarizing filter 32 and, after passing through the visible light interruption filter 33, irradiated to a head part and the like of the driver 12. The illumination light reflected by the driver 12 and the like, and a light (disturbance light) other than the illumination light pass through the visible light interruption filter 33, and is polarized in a predetermined direction by the polarizing filter 34 whose polarization direction intersects approximately, perpendicularly to the polarizing filter 32, thereby passing through the optical lens 41. As to the light passing through the optical lens 41, only a component near a peak wavelength of the illumination 31 is transmitted by the infrared BPF 42, and the light passing through the infrared BPF 42 enters to the image pickup element 43 and is image-picked-up. The image pickup element 43 supplies the driver image obtained as a result of the image pickup to the control section 44.

On the other hand, in a case where the illumination 31 is extinguished, the disturbance light reflected by the driver 12 and the like pass through the visible light interruption filter 33, and is polarized in a predetermined direction by the polarizing filter 34, thereby passing through the optical lens 41. As to the light passing through the optical lens 41, only the component near the peak wavelength of the illumination 31 is transmitted by the infrared BPF 42, and the light passing through the infrared BPF 42 enters to the image pickup element 43 and is image-picked-up. The image pickup element 43 supplies the driver image obtained as a result of the image pickup to the control section 44.

The control section 44 comprises, e.g., the CPU (Central Processing Unit), a DSP (Digital Signal Processor), a ROM (Read Only Memory) and a RAM (Random Access Memory), or an MPU (Micro Processing UNIT) etc. and, by implementing a program, realizes functions of a synchronous control section 51, a pixel addition section 52, and a differential image generating section 53.

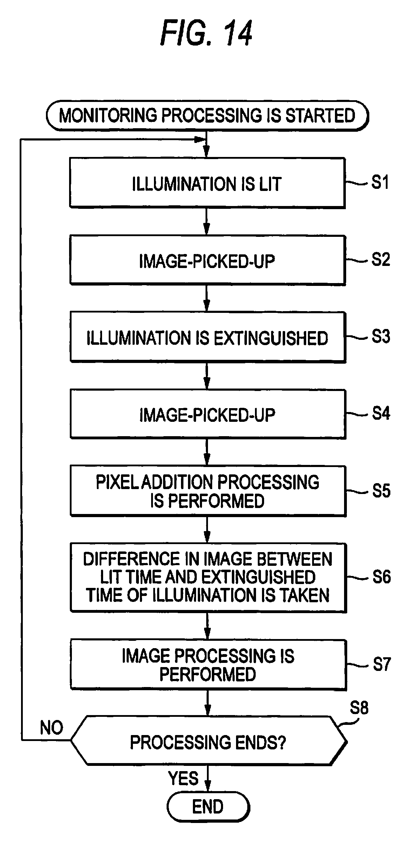

The synchronous control section 51 controls a lighting and an extinguishment of the illumination light of the illumination 31. Further, as mentioned later by referring to Fig. 14, the synchronous control section 51 controls a timing in which the illumination 31 flickers and a timing in which the image pickup element 43 image-picks-up.

As mentioned later by referring to Fig. 14 and the like, the pixel addition section 52 divides the driver image into regions of predetermined sizes, and generates an image (hereafter, called an addition image as well) comprising a pixel in which there is added a pixel value of a pixel in each region. The pixel addition section 52 supplies the generated addition image to the differential image generating section 53.

As mentioned later by referring to Fig. 14 and the like, the differential image generating section 53 generates a differential image which is a difference between the addition image at a lit time of the illumination light of the illumination 31 and the addition image at an extinguished time, and supplies it to the image processing device 22.

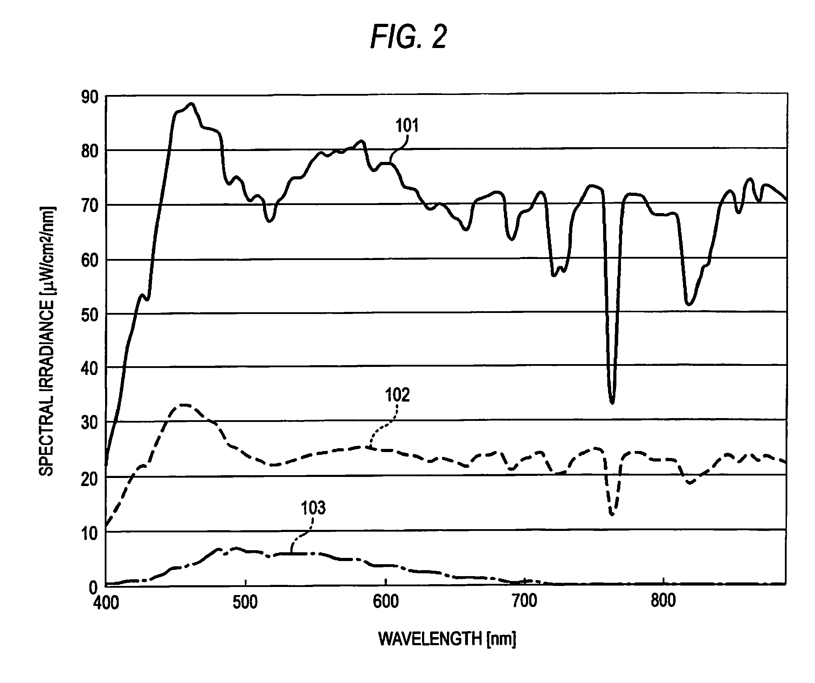

Next, by referring to Fig. 2 to Fig. 12, there is explained about a detail of each constitution element of the image pickup device 21.

First, by referring to Fig. 2 to Fig. 9, there are explained about a peak wavelength which is a wavelength in which a light intensity (or luminance) of the illumination light of the illumination 31 becomes a maximum, and a center wavelength which is a center of a wavelength of the light transmitting through the infrared BPF 42.

Mainly with two purposes, the illumination 31 is provided in a position in which it illuminates the face of the driver 12 approximately from a front. That is, in the vehicle chamber in the daytime, although there can be obtained a light quantity sufficient for image-picking-up the driver 12, it is difficult to ensure a sufficient light quantity in the vehicle chamber in the nighttime. Therefor, the illumination 31 is provided as an auxiliary illumination for ensuring the light quantity necessary for image-picking-up the face of the driver in the nighttime. This is the first purpose.

Further, the light environment in the vehicle chamber during running always fluctuates by the disturbance light which enters from the vehicle outside into the vehicle. As mentioned above, this disturbance light generates the deep shadow in the face of the driver 12, so that there is a fear becoming a cause bringing about a failure of the image processing in the image processing device 22 in the post-stage or the decrease in the performance. Therefor, the illumination 31 is provided for suppressing the shadow of the face of the driver 12 from generating in the driver image. This is the second purpose.

By the way, in order to suppress the generation of the shadow of the face of the driver 12 to thereby suppress a light spot, it is necessary to irradiate, by the illumination 31, the illumination light approximately, uniformly to the face of the driver 12 in such a degree that the light quantity does not saturate. Further, in order that the light quantity in the face of the driver 12 is made approximately uniform, it is necessary that the illumination light has an illuminance higher than the disturbance light. And, in order to make such that the light quantity of the illumination 31 exceeds the light quantity of the disturbance light, it is desirable to select, as the peak wavelength, a wavelength in which the illuminance of the disturbance light is as weak as possible.

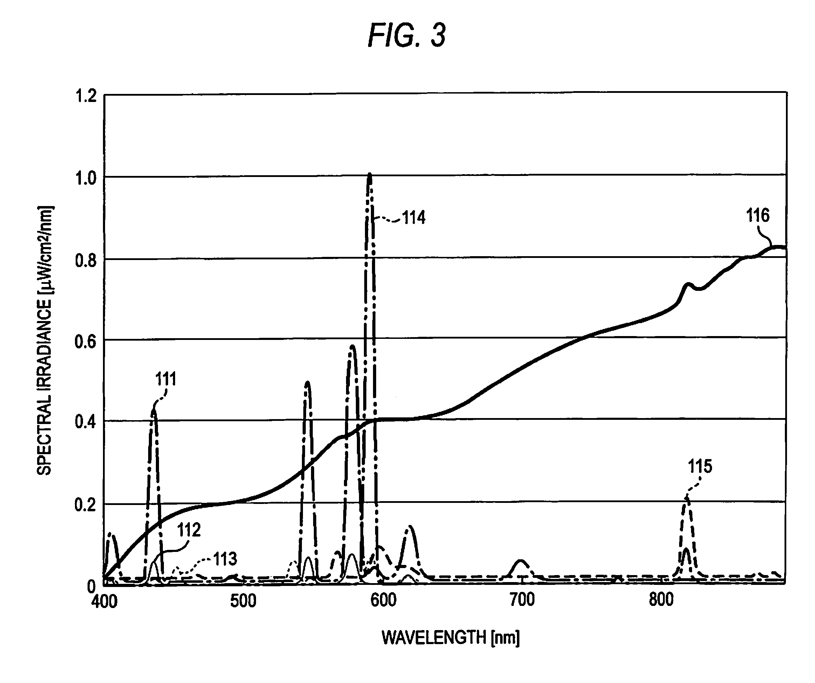

Fig. 2 and Fig. 3 are graphs showing examples of spectra of a typical disturbance light entering into the vehicle chamber. Fig. 2 shows the example of the spectrum of the sunlight, and Fig. 3 shows the example of the spectrum of an artificial light. An axis of abscissa in Fig. 2 and Fig. 3 shows the wavelength (unit, nm), and an axis of ordinate shows a spectral irradiance (unit, $\mu W/cm^2/nm$).

A curve 101 in Fig. 2 shows the spectrum of the sunlight whose illuminance at a fine weather time is about 100,000 lx, a curve 102 shows the spectrum of the sunlight whose illuminance at a cloudy weather time is about 30,000 lx, and a curve 103 shows the spectrum of the sunlight whose illuminance in a shade at the fine weather time is about 10,000 lx.

Further, a curve 111 in Fig. 3 shows the spectrum of a night game illumination, a curve 112 shows the spectrum of a mercury vapor lamp on a road, a curve 113 shows the spectrum of the mercury vapor lamp in a parking lot, a curve 114 shows the spectrum of a sodium vapor lamp, a curve 115 shows the spectrum of the mercury vapor lamp, and a curve 116 shows the spectrum of a headlight irradiated from a front of 3 m.

As shown in Fig. 2 and Fig. 3, the light quantity of the sunlight is overwhelmingly large in comparison with the light quantity of a light source of other kind. Accordingly, it is desirable to select, as the peak wavelength of the illumination 31, a vicinity of the wavelength in which the intensity of the sunlight is weak.

According to "JIS C 8911: 1998 *Niji Kijun Kesshou-kei Taiyou Denchi Seru*, Fig. 1 *Kijun Taiyou-kou* No *Bunkou Housha Shoudo Bunpu, Zaidan Houjin Nihon Kikaku Kyoukai*" (hereafter, called a reference Fig. 1), although the sunlight has an intensive illuminance over the whole range in a visible light region, it gradually attenuates in an infrared light region. Especially, in a vicinity in which the wavelength is 935 nm, the illuminance remarkably attenuates, and becomes smaller than a half in comparison with a value in a vicinity in which a neighboring wavelength is 800 nm or 1000 nm. This is because, as to the wavelength of the sunlight, a component in the vicinity of 935 nm is absorbed by a moisture in the atmosphere, and it is a characteristic always seen irrespective of a difference in whether and place, although an attenuating degree somewhat differs.

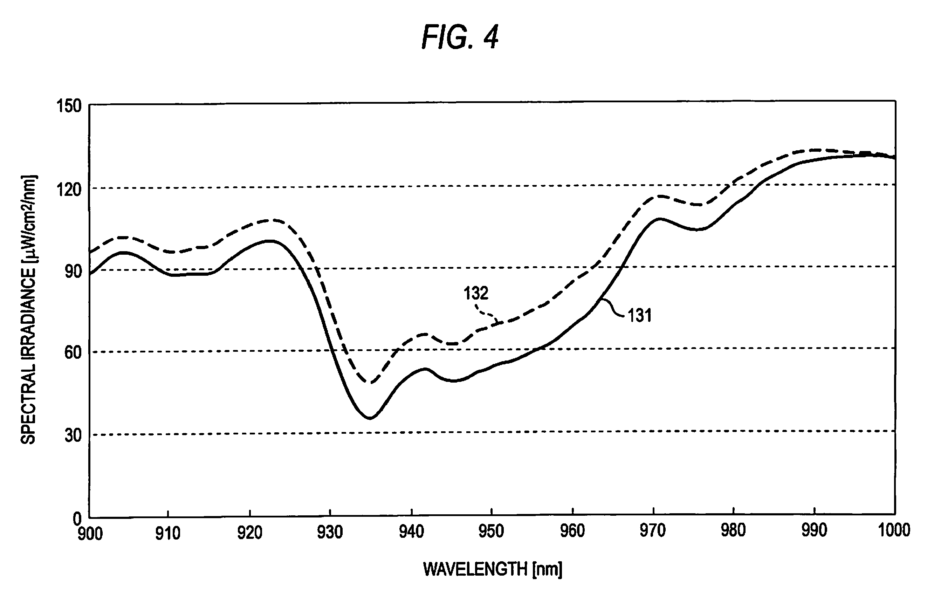

Fig. 4 is a graph in which the spectrum of the sunlight in the vicinity of 935 nm is compared by a season. Concretely, a curve 131 shows one example of the spectrum of the sunlight around a noon in a summer, and a curve 132 shows one example of the spectrum of the sunlight around the noon in a winter. From Fig. 4, the fact is understood that, in the summer and the winter, the spectrum of the sunlight in the vicinity of 935 nm becomes approximately the same tendency. Incidentally, as mentioned above, since the attenuation of the spectrum of the sunlight in the vicinity of 935 nm is one by the moisture in the atmosphere, there is a tendency in which, rather in the summer existing in a tendency in which a humidity is higher than the winter, the illuminance of the wavelength in the vicinity of 935 nm becomes low.

By the way, the narrower a filter width of the infrared BPF 42 becomes, the steeper a transmission characteristic becomes, so that a wavelength band of the transmitting light ray is limited and it is possible to reduce an influence of the disturbance light, whereas the light quantity of the light after the transmission decreases. On the other hand, the wider the filter width of the infrared BPF 42 becomes, the milder the transmission characteristic becomes, so that the light ray of a wider wavelength band is transmitted and the influence of the disturbance light becomes large, whereas a decrease in the light quantity of the light after the transmission is suppressed.

According to the reference Fig. 1, the spectrum of the sunlight does not symmetrically change with 935 nm being made a center, but it changes, in a region in which the wavelength is shorter than 935 nm, more steeply in comparison with a region in which the wavelength is longer than 935 nm, and the light quantity becomes large as well. Accordingly, in a case where the peak wavelength of the illumination light of the illumination 31 and the center wavelength of the infrared BPF 42 are made 935 nm, it is necessary to narrow the filter width of the infrared BPF 42 in order to make so as not to undergo an influence of a component, of the sunlight, whose wavelength is shorter than 935 nm.

However, if the filter width of the infrared BPF 42 is narrowed, the light quantity of the transmitting illumination light is insufficient, so that the driver image becomes dark. Further, in a case where the infrared BPF 42 is constituted by an interference filter, depending on an incident angle of the light ray, its characteristic shifts to a short wavelength side by about several nm - several tens nm and, even if the filter width is narrowed, there is a possibility that there is subjected to the influence of the component, of the sunlight, whose wavelength is shorter than 935 nm.

On the other hand, as to the spectrum of the sunlight, also a change is mild in the region in which the wavelength is longer than 935 nm, in comparison with the region in which the wavelength is shorter than 935 nm, and the light quantity becomes small as well. Accordingly, by making the peak wavelength of the illumination light of the illumination 31 and the center wavelength of the infrared BPF 42 into the wavelength longer than 935 nm in the vicinity of 935 nm, it becomes possible to suppress the influence of the sunlight while widening the filter width of the infrared BPF 42.

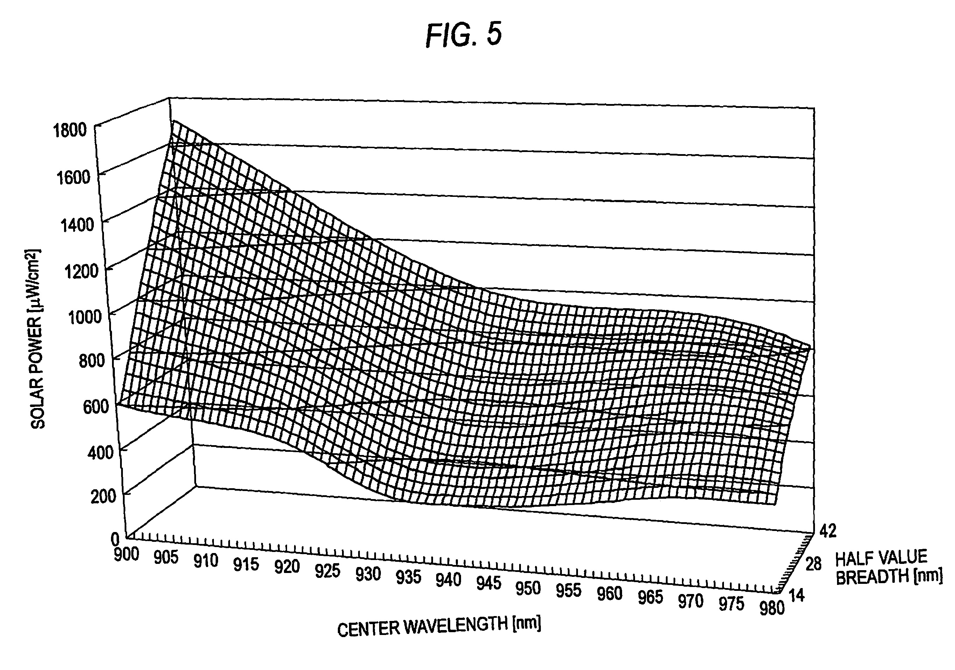

Fig. 5 is a graph showing a result in which there was measured a power of the sunlight after being passed through the infrared BPF 42 while changing the center wavelength and a half value breadth of the infrared BPF 42. In Fig. 5, an axis of abscissa shows the wavelength (unit, nm), an axis in a depth direction shows the half value breadth (unit, nm), and an axis of ordinate shows a power (unit, $\mu W/cm^2$) of the sunlight.

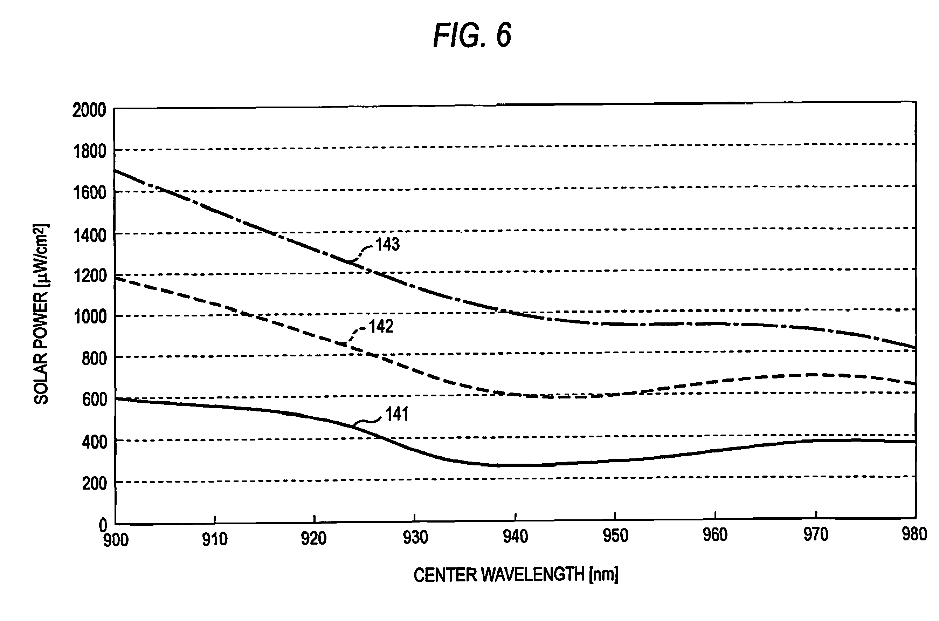

Further, Fig. 6 is one in which the graph for every half value breadth is denoted on a two dimension with the axis in the depth direction being deleted from the graph in Fig. 5. Concretely, a curve 141 shows a relation between the center wavelength of the infrared BPF 42 at a time of the half value breadth = 14 nm and the power of the sunlight after being passed through the infrared BPF 42, a curve 142 shows a relation between the center wavelength of the infrared BPF 42 at a time of the half value breadth = 28 nm and the power of the sunlight after being passed through the infrared BPF 42, and a curve 143 shows a relation between the center wavelength of the infrared BPF 42 at a time of the half value breadth = 42 nm and the power of the sunlight after being passed through the infrared BPF 42.

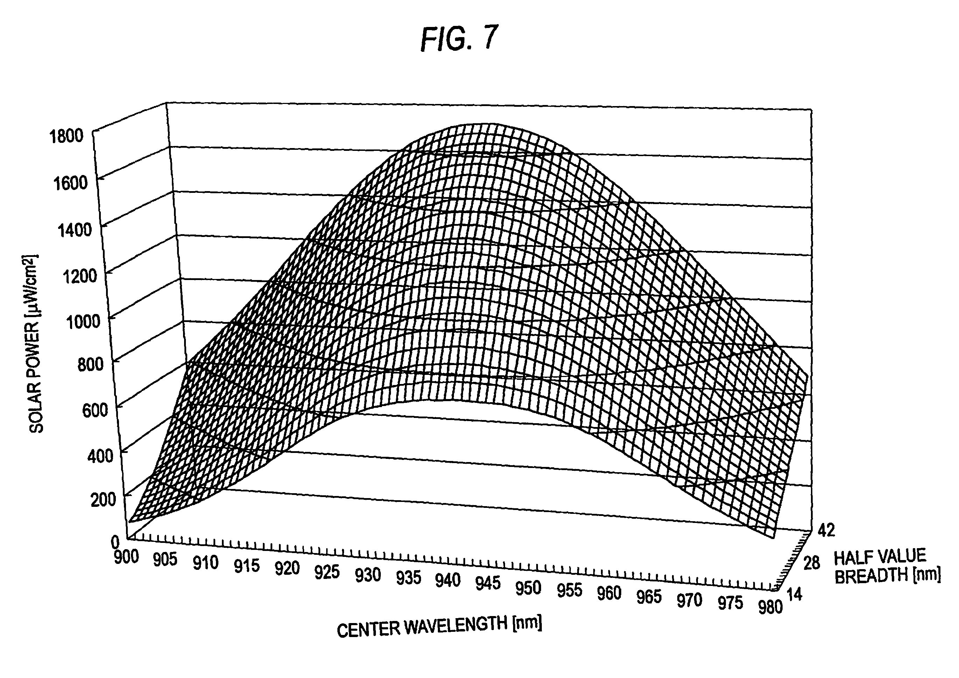

Similarly to Fig. 5, Fig. 7 is a graph showing a result in which there was measured a power of an LED (Light Emitting Diode) light after being passed through the infrared BPF 42 while changing the center wavelength and the half value breadth of the infrared BPF 42.

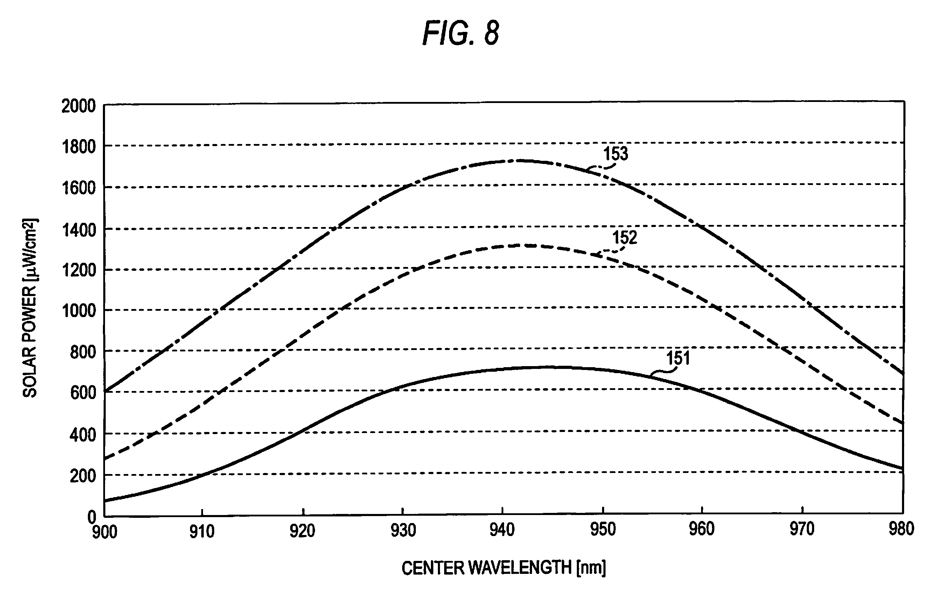

Further, similarly to Fig. 6, Fig. 8 is one in which the graph for every half value breadth is denoted on the two dimension with the axis in the depth direction being deleted from the graph in Fig. 7. Concretely a curve 151 shows a relation between the center wavelength of the infrared BPF 42 at the time of the half value breadth = 14 nm and a power of the LED light after being passed through the infrared BPF 42, a curve 152 shows a relation between the center wavelength of the infrared BPF 42 at the time of the half value breadth = 28 nm and the power of the LED light after being passed through the infrared BPF 42, and a curve 153 shows a relation between the center wavelength of the infrared BPF 42 at the time of the half value breadth = 42 nm and the power of the LED light after being passed through the infrared BPF 42.

As shown in Fig. 5 to Fig. 8, the powers of the sunlight and the LED light after passing through the infrared BPF 42 change by the center wavelength and the half value breadth of the infrared BPF 42. And, in a case where the center wavelength of the infrared BPF 42 is in the vicinity of 940 nm - 950 nm, the power of the LED light exceeds the power of the sunlight, and a difference between thembecomes the largest. Accordingly, it is considered that it is suitable to set the peak wavelength of the illumination 31 and the center wavelength of the infrared BPF 42 to a degree of 940 nm - 950 nm. Further, by the fact that the illumination light is made an infrared light in which the peak wavelength is made 940 nm - 950 nm, the driver 12 is prevented from being dazzled by the illumination light.

Further, although there depends large on the light quantity of the illumination 31 and a performance of the image processing device 22, in view of a shape of the spectrum of the sunlight, it is considered suitable to set the half value breadth of the infraredBPF 42 to a degree of 40 nm. Incidentally, the larger the light quantity of the illumination 31 becomes, or the lower the luminance of the driver image required in the image processing device 22 becomes, it becomes possible to set the half value breadth of the infrared BPF 42 lower.

Incidentally, hereunder, there is explained about a case where the peak wavelength of the illumination 31 and the center wavelength of the infrared BPF 42 are set to 940 nm, and the half value breadth of the infrared BPF 42 is set to 40 nm.

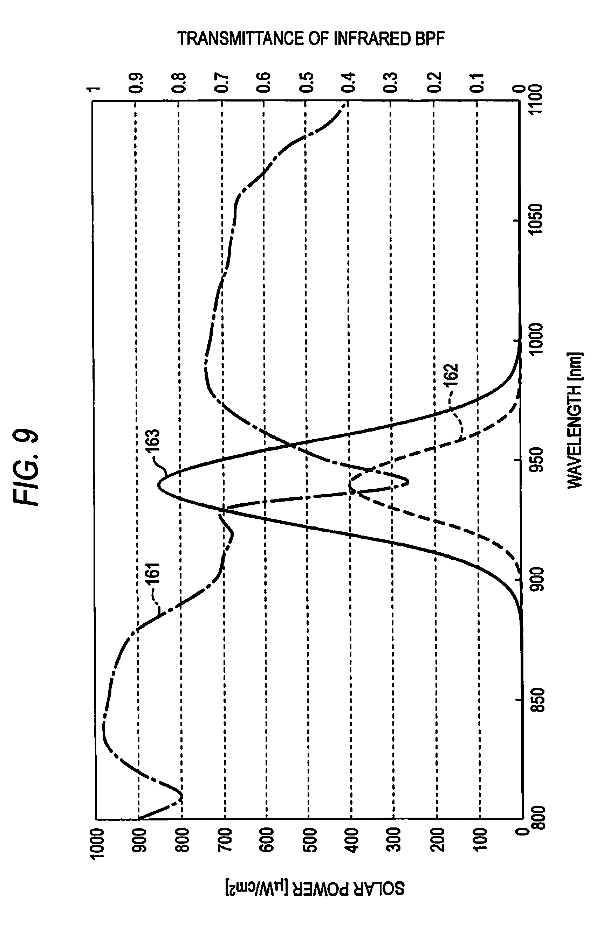

Additionally, it is desirable to set a radiation distribution of the illumination 31 such that approximately the whole components of the illumination light of the illumination 31 transmit through the infrared BPF 42. Fig. 9 is a graph schematically showing examples of relations between [spectra of the sunlight and the illumination light] and [a transmission characteristic of the infrared BPF 42], in a case where the radiation distribution of the illumination 31 is set such that approximately the whole components of the illumination light of the illumination 31 pass through the infrared BPF 42. An axis of abscissa in Fig. 9 shows the wavelength (unit, nm), an axis of ordinate in a left side shows the spectral irradiance (unit, $W/m^2/\mu m$), and an axis of ordinate in a right shows a transmittance of the infrared BPF 42. Further, a curve 161 shows an example of the spectrum of the sunlight, a curve 162 shows an example of the spectrum of the illumination light of the illumination 31, and a curve 163 shows an example of the transmission characteristic of the infrared BPF 42.

In the example of Fig. 9, the wavelength of the illumination light of the illumination 31 is approximately included in a range, of the wavelength, in which the incident light transmits through the infrared BPF 42. That is, a radiation characteristic of the illumination 31 is set such that approximately the whole components of the illumination light of the illumination 31 transmit through the infrared BPF 42.

By the way, since the monitoring system 11 is installed in a limited space in the vehicle chamber, there is desired the fact that a size of the illumination 31 is made as small as possible. Accordingly, e.g., an infrared LED which is small and light in weight, or the like is suitable as a light source of the illumination 31.

However, even if it is a wavelength region in which the sunlight attenuates, since it is difficult to obtain by one LED the light quantity corresponding to the sunlight, it is necessary to provide plural LEDs. On the other hand, from a viewpoint of making the monitoring system 11 small, it is desirable to make the number of the LEDs as small as possible. Whereupon, to the illumination 31, it is necessary to apply a means for ensuring the light quantity corresponding to the sunlight by the LEDs whose number is as small as possible.

For example, since it is unnecessary to irradiate the illumination light to a portion other than the face of the driver 12, it is considered to devise a packaging such that the illumination light is irradiated as much as possible to the face of the driver 12 while being concentrated, thereby improving a radiation directional characteristic of the illumination 31. Further, it is considered to provide a reflecting plate and the like such that a leak light ray of the illumination 31 is irradiated toward the face of the driver 12.

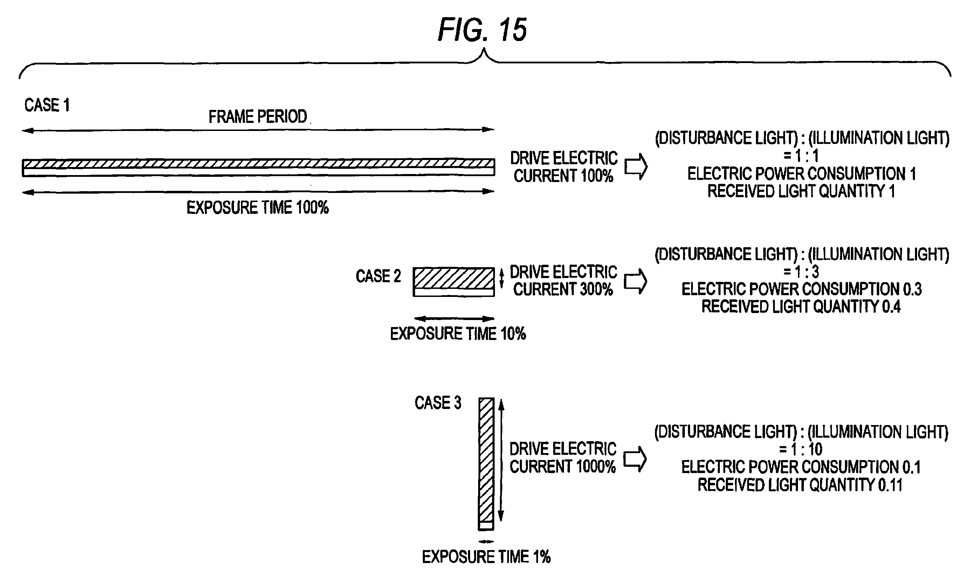

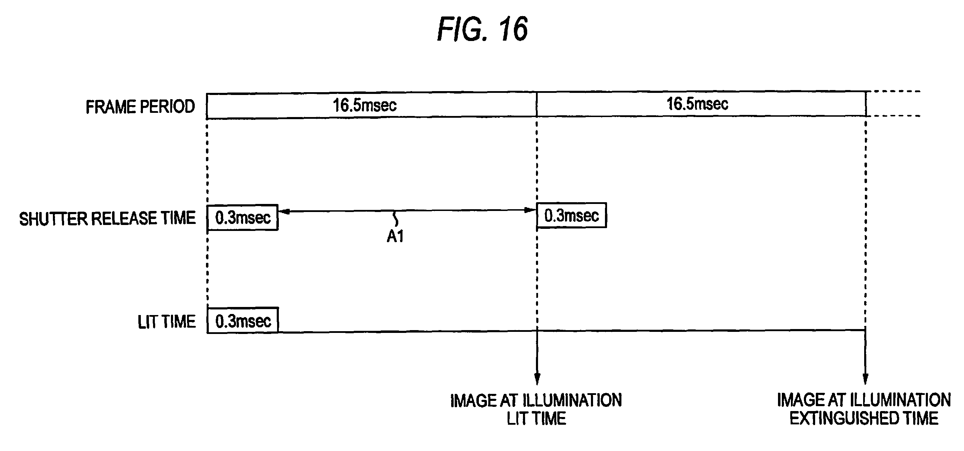

Further, since the LED light-emits more brightly the higher a flowing electric current is, it is considered to increase the electric current to be flowed to each LED. However, on the other hand, from viewpoints of the electric power consumption and a calorific value, it is desirable that a magnitude of the electric current to be flowed to the LED is rather as small as possible. Further, if the electric current exceeding a rated current is flowed, the LED is destroyed and, if the electric current near the rated current is continued to be flowed, a life of the LED becomes short. Whereupon, the illumination 31 is pulse-lit by a pulse-like drive electric current as mentioned later by referring to Fig. 15 and Fig. 16.

The infrared BPF 42 is constituted, e.g., by the interference filter using a dielectric multilayer film. As mentioned above, the infrared BPF 42 selectively transmits only the light ray in the vicinity of 940 nmwhich is the peak wavelength of the illumination 31. For example, a maximum transmittance of the infrared BPF 42 in regard to the light ray whose wavelength is 940 nm is made about 90%. Accordingly, by the infrared BPF 42, there is attenuated the light in a wavelength band (e.g., a visible light band or the like) in which the sunlight exceeds the illuminace of the illumination 31, and the light in a wavelength band in which the illuminance of the illumination 31 exceeds the sunlight is extracted and enters to the image pickup element 43. By this it is possible to reduce the influence of the disturbance light.

Incidentally, in a case where the infrared BPF 42 is constituted by the interference filter, it is desirable to install it in such a position that it is not contaminated by contacting with a hand and the like.

Further, there may be made such that the infrared BPF 42 is constituted, e.g., by a color filter comprising a color glass or plastic etc., other than the interference filter using the dielectric multilayer film.

The polarizing filters 32, 34 are provided in order to remove or reduce a component in which the illumination light is mirror-reflected by eyeglasses that the driver 12 is wearing, and the like. For example, in the case where the driver 12 is wearing the eyeglasses, there is a case where, depending on a kind of the eyeglasses and an irradiation angle of the illumination 31 in regard to the driver 12, the illumination light is mirror-reflected by the eyeglasses. And, there is the fact that the mirror-reflected light appears in the driver image as a region like a white point. For example, if this region like the white point overlaps with a position of a pupil of the driver 12, such an inconvenience occurs that, in the image processing, a detection of the pupil becomes difficult.

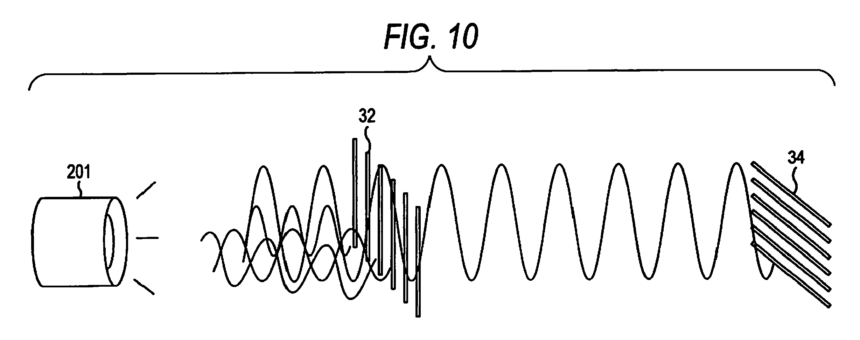

The polarizing filters 32, 34 correspond together to the infrared light and, as mentioned above, are installed such that their polarization directions mutually, perpendicularly intersect. For example, as shown in Fig. 10, the polarizing filter 32 and the polarizing filter 34 are disposed such that their polarization faces become mutually parallel and their polarization directions perpendicularly intersect. And, there is considered about a case where, from the polarizing filter 32 side, there is irradiated the illumination light of an illumination 201, i.e., the light vibrating approximately, uniformly in all directions perpendicular to a travelling direction. In this case, the illumination light is polarized in one predetermined direction by the polarizing filter 32 and interrupted approximately, completely by the polarizingfilter 34. By utilizing a nature of the polarization like this, it is possible to remove or reduce the component mirror-reflected by the eyeglasses and the like.

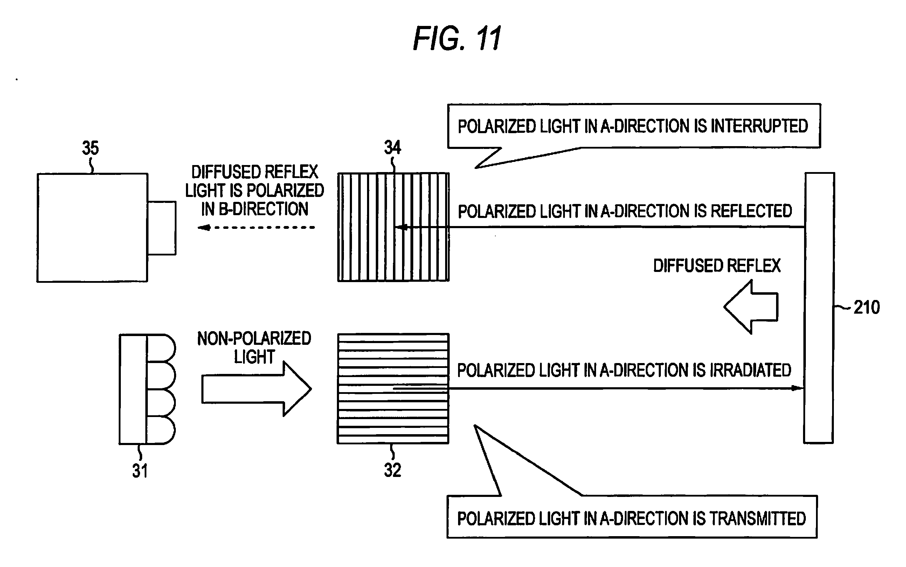

Here, by referring to Fig. 11, there is more detailedly explained about a principle removing or reducing the component mirror-reflected, by the polarizing filters 32, 34.

The illumination light emitted from the illumination 31 and not polarized is polarized in one predetermined direction (hereafter, called an A-direction) by transmitting through the polarizing filter 32. The illumination light polarized in the A-direction is irradiated to a subject 210 and reflected. The illumination light reflected by the subject 210 includes the light mirror-reflected by the eyeglasses of the driver 12 and the like, and other diffusion-reflected light. Between them, since the mirror-reflected illumination light is polarized in the A-direction, it is approximately interrupted by the polarizing filter 34. And, only the diffusion-reflected illumination light is polarized in a direction (hereafter, called a B-direction) perpendicularly intersecting with the A-direction by the polarizing filter 34, and enters to the image pickup section 35. That is, the mirror-reflected component is removed from the reflex light of the illumination light, and additionally the light polarized in the B-direction enters to the image pickup section 35.

Incidentally, about the reflex light of the disturbance light reflected by the subject 210, it is polarized in the B-direction by the polarizing filter 34 irrespective of a difference in the mirror reflex and the diffusion reflex, and enters to the image pickup section 35. Incidentally, also about the disturbance light, depending on an angle of the mirror reflex, there is a case where an S-polarization occupies a majority (reflex polarization), and there is a case where the component of the reflex light of the mirror-reflected disturbance light can be also reduced or removed by the fact that the polarizing filter 34 is made a filter in a P-polarization direction.

The visible light interruption filter 33 is constituted by a filter interrupting the visible light and transmitting the light ray of the wavelength exceeding an infrared region. As to the visible light interruption filter 33, a material and a dye are determined by considering an optical characteristic andanenvironmentaldurability. Forexample, thevisiblelight interruption filter 33 is constituted by kneading the dye absorbing the visible light to acrylic or polycarbonate.

The visible light interruption filter 33 is provided mainly for the purpose of concealing the image pickup device 21 from the driver 12, and has an advantage relieving such a psychological burden as to "be being monitored" for instance. Further, the visible light interruption filter 33 accomplishes a role protecting an inside of the image pickup device 21 from dusts, water droplets and the like.

Incidentally, like Fig. 1, in a case where the visible light interruption filter 33 is disposed in a most front face in the subject side, it is desirable to use, in the visible light interruption filter 33, one adjusted such that a double refraction phenomenon does not occur.

Further, in view of a cost aspect and a durability, there may be made such that, by loosely setting a transmission characteristic of the infrared BPF 42, i.e., making such that the transmission of an unnecessary light ray other than the selected wavelength is permitted in a certain degree, the light ray of that unnecessary component is interrupted by the visible light interruption filter 33.

Additionally, it is also possible to make such that, as the visible light interruption filter 33, there is selected one of a characteristic sharply interrupting the incident light in a suitable wavelength, and additionally there is combined an infrared interruption filter similarly, sharply interrupting the incident light in the suitable wavelength, thereby constituting, instead of the infrared BPF 42, a BPF by these two interruption filters. In this case, since it is frequent that the infrared interruption filter is transparent one, it is desirable that there is made such that the visible light interruption filter 33 is disposed in the front.

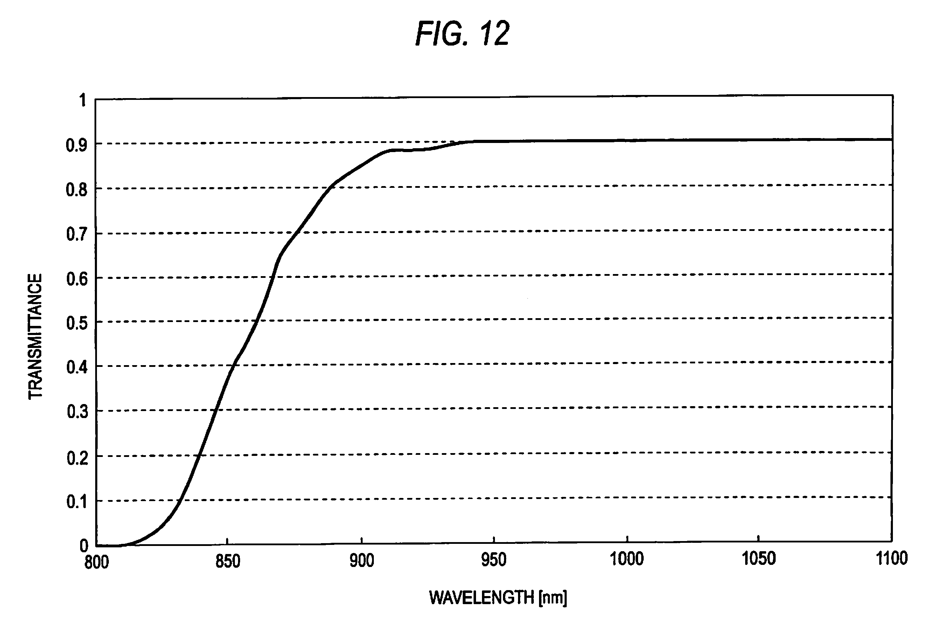

Fig. 12 is a graph showing an example of a characteristic of the visible light interruption filter 33. In Fig. 12, an axis of abscissa shows the wavelength (unit, nm), and an axis of ordinate shows the transmittance. In this example, the transmittance of the light whose wavelength is 800 nm or less becomes approximately 0, and the transmittance of the light of 940 nm that is the peak wavelength of the illumination 31 becomes about 0.9.

The optical lens 41 is constituted by a lens designed so as to image-form in the infrared region while being coincided with the peak wavelength of the illumination 31. By this, it is possible to prevent such an image formation deterioration, which has a possibility occurring when the optical lens for the visible light is used, that the image of the subject to which the infrared light was irradiated becomes hazy by the illumination 31. Further, on the basis of a relative position between the driver 12 and the image pickup device 21, an image pickup distance and the like, the optical lens 41 is designed such that a picture angle, an image periphery distortion or the like becomes a suitable value. Additionally, a material of the optical lens 41 suffices if it is one enduring a use under an environment in the vehicle chamber, and there is used, e.g., a glass or plastic.

Further, there may be made so as to cause the optical lens 41 to have a function of the infrared BPF 42 by forming the dielectric multilayer film on a lens face of the optical lens 41.

The image pickup element 43 is an element having a function converting the entering light into an electric signal, and it is constituted, e.g., by the CMOS (Complementary Metal Oxide), the CCD (Charge Coupled Device) and the like. Further, for the image pickup element 43, there is adopted an element in which there is well performed a photoelectric conversion in regard to the light of the wavelength band in which the peak wavelength of the illumination 31is made a center. Further, as mentioned later, since the image pickup element 43 performs an image pickup in an exposure time of a short term while synchronizing with a pulse lighting of the illumination 31, an element having a global shutter function approximately, simultaneously releasing the shutter of all pixels is adopted in the image pickup element 43.

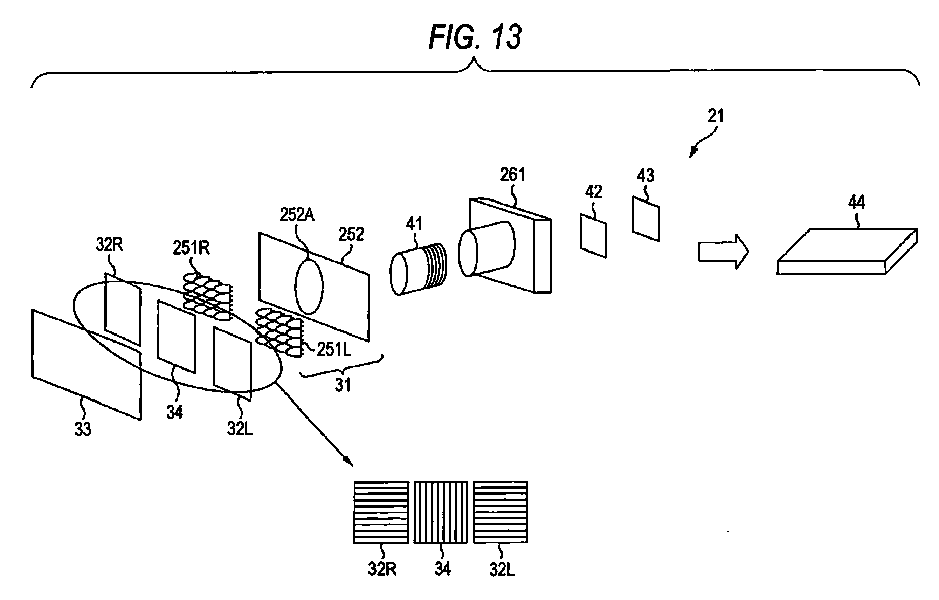

Fig. 13 is an exploded view schematically denoting an example of a constitution of the image pickup device 21.

In the image pickup device 21 of Fig. 13, the polarizing filter 32 is constituted by two polarizing filters of a polarizing filter 32L and a polarizing filter 32R. The polarizing filter 32L, the polarizing filter 32R and the polarizing filter 34 are juxtaposed left and right in the order of the polarizing filter 32L, the polarizing filter 34 and the polarizing filter 32R, and disposed so as to be opposed to a face in a side opposite to the subject side of the visible light interruption filter 33. Further, as mentioned above, the polarizing filter 32L and the polarizing filter 32R and the polarizing filter 34 are disposed such that their polarization directions approximately, perpendicularly intersect.

The illumination 31 is constituted by LED units 251L, 251R respectively comprising the same number of infrared LEDs, and an illumination substrate 252 for a control. An illumination face of the LED unit 251L is covered by the polarizing filter 32L, and the illumination light emitted from the LED unit 251L is irradiated to the subject through the polarizing filter 32L and the visible light interruption filter 33. Similarly, an illumination face of the LED unit 251R is covered by the polarizing filter 32R, and the illumination light emitted from the LED unit 251R is irradiated to the subject through the polarizing filter 32R and the visible light interruption filter 33.

Like this, by irradiating the illumination light from the right and the left, it is possible to irradiate the illumination light to the face of the driver 12 with an approximately, same brightness.

In the illumination substrate 252, there is provided a hole 252A whose size conforms to the optical lens 41. The light from the subject passes through the visible light interruption filter 33, the polarizing filter 34 and the hole 252A of the illumination substrate 252, and enters to the optical lens 41 attached to a lens holder 261. The light which entered to the optical lens 41 transmits through the infrared BPF 42 provided in a face in a side opposite to the optical lens 41 side of the lens holder 261, and image-forms in an image pickup face of the image pickup element 43. And, the image which was image-picked-up by the image pickup element 43 is supplied to the control section 44.

Incidentally, it is also possible to replace the order disposing the polarizing filters 32L, 32R and 34, and the visible light interruption filter 33. However, in a case where the polarizing filters 32L, 32R and 34 are disposed in a most front face in the subject side, it is desirable to make so as to apply a protective film, which does not hinder the polarization and whose transmittance is high, to surfaces of the polarizing filters 32L, 32R and 34 in the subject side. Further, in the case where the polarizing filters 32L, 32R and 34 are disposed in the most front face in the subject side, additionally it is also possible to replace the order disposing the visible light interruption filter 33 and the infrared BPF 42.

However, in a case where there is made so as to constitute the infrared BPF 42 by the interference filter using the dielectric multilayer film, for the following reasons, it is desirable to make such that, as shown in Fig. 13, the infrared BPF 42 is disposed in front of the image pickup element 43.

(1) Since the dielectric multilayer film is liable to break, it is rather good to avoid the fact that it is disposed in the most front face in the subject side.
(2) There is a fear that the dielectric multilayer film hinders the polarization of the polarizing filters 32L, 32R and 34.
(3) The dielectric multilayer film is expensive and, in view of a cost aspect, it is rather good to make its size as small as possible.

Incidentally, in a case where there is made so as to constitute the infrared BPF 42 by a color filter, since the above three issues are reduced, it is also possible to mutually replace the order disposing the polarizing filters 32L, 32R and 34, and the visible light interruption filter 33 as well as the infrared BPF 42.

Next, by referring to Fig. 14, there is explained about a monitoring processing implemented by the monitoring system 11.

Incidentally, this processing is commenced, e.g., when an engine of own vehicle was started.

In a step S1, the synchronous control section 51 lights the illumination 31. By this, the illumination light of the illumination 31 is irradiated to the driver 12 and the like through the polarizing filter 32 and the visible light interruption filter 33, and its reflex light (hereafter, called an illumination reflex light) enters to the image pickup element 43 through the visible light interruption filter 33, the polarizing filter 34, the optical lens 41 and the infrared BPF 42. Further, a reflex light (hereafter, called a disturbance reflex light) of the disturbance light reflected by the driver 12 and the like enters to the image pickup element 43 through the visible light interruption filter 33, the polarizing filter 34, the optical lens 41 and the infrared BPF 42.

In a step S2, the image pickup element 43 image-picks-up under the control of the synchronous control section 51. That is, the illumination reflex light and the disturbance reflex light are polarized in a predetermined direction (e.g., a B-direction in Fig. 11) and, among the components of the polarized lights, the component in the wavelength band of a predetermined width (e.g., about 40 nm) with the wavelength of 940 nmbeingmade the center is extracted and image-picked-up. The image pickup element 43 supplies the driver image obtained as a result of the image pickup to the pixel addition section 52.

In a step S3, the synchronous control section 51 extinguishes the illumination 31. By this,onlythedisturbance reflex light enters to the image pickup element 43 through the visible light interruption filter 33, the polarizing filter 34, the optical lens 41 and the infrared BPF 42.

In a step S4, the image pickup element 43 image-picks-up under the control of the synchronous control section 51. That is, the disturbance reflex light are polarized in the predetermined direction (e.g., the B-direction in Fig. 11) and, among the components of the polarized light, the component in the wavelength band of the predetermined width (e.g., about 40 nm) with the wavelength of 940 nm being made the center is extracted and image-picked-up. The image pickup element 43 supplies the driver image obtained as the result of the image pickup to the pixel addition section 52.

Here, by referring to Fig. 15, there are explained about relations between a lit time and an electric power consumption of the illumination 31, and a received light quantity of the image pickup element 43.

As mentioned above, the number of the LEDs of the illumination 31 and a drive electric current are in a relation of a trade-off. That is, if the number of the LEDs is increased, it is possible to make small the drive electric current per one LED, but the size of the illumination 31 becomes large. Reversely, if the number of the LEDs is decreased, it is possible to make small the size of the illumination 31, but the drive electric current per one LED becomes large.

By the way, generally, a rated value of a pulse-like drive electric current (hereafter, called a pulse drive electric current), which is intermittently flowed in order to flicker the LED, becomes a very large value in comparison with the rated value of a drive electric current (hereafter, called a steady drive electric current) in a case where it is always flowed in order to always light the LED. Its difference is approximately inverse proportion to a lit time of the LED for instance, and becomes about ten times in maximum. Accordingly, by pulse-driving the LED, there is instantaneously obtained the light quantity of about ten times of a steady drive time and, even if the number of the LEDs is reduced, it becomes possible to instantaneously ensure the light quantity exceeding the sunlight. That is, it is possible to instantaneously improve a rate of the light quantity of the illumination 31 in regard to the disturbance light, so that it is possible to suppress a generation of the light spot in the driver image. Further, it is possible to suppress the electric power consumption and the calorific value of the illumination 31.

On the other hand, the brightness of the driver image depends on an exposure time at an image pickup time. That is, the longer the exposure time is, the more the received light quantity of the image pickup element 43 increases, and the driver image becomes bright. Reversely, the shorter the exposure time is, the more the received light quantity of the image pickup element 43 decreases, and the driver image becomes dark. Accordingly, only by simply shortening the lit time of the illumination 31 and increasing the electric current, a sufficient light quantity is not obtained, so that there is a possibility that there is not obtained the driver image of the brightness necessary for the image processing of the image processing device 22.

In Fig. 15, there are shown three cases in which the lit time and the drive electric current of the illumination 31 were changed. The case 1 shows a case where the illumination 31 was lit over the whole term of a frame period and the image pickup element 43 was exposed, the case 2 shows a case where the illumination 31 was lit by the drive electric current of 300% of the case 1 by a term of 10% of the frame period and the image pickup element 43 was exposed, and the case 3 shows a case where the illumination 31 was lit by the drive electric current of 1000% of the case 1 by a term of 1% of the frame period and the image pickup element 43 was exposed.

Provisionally, in a case where a rate between the light quantities of the disturbance light and the illumination light in the case 1 is made 1 : 1, the electric power consumption of the illumination 31 is made 1 and the received light quantity of the image pickup element 43 during an exposure term is made 1, in the case 2, the rate between the light quantities of the disturbance light and the illumination light becomes 1 : 3, the electric power consumption of the illumination 31 becomes 0.3 and the received light quantity of the image pickup element 43 becomes 0.4, and, in the case 3, the rate between the light quantities of the disturbance light and the illumination light becomes 1 : 10, the electric power consumption of the illumination 31 becomes 0.1 and the received light quantity of the image pickup element 43 becomes 0.11.

Like this, the shorter the lit term of the illumination 31 is made and the larger the drive electric current is made, the more the influence of the disturbance light can be reduced and the more the electric power consumption decreases, whereas the more the received light quantity of the image pickup element 43 decreases and the more the driver image becomes dark.

Accordingly, it is desirable that, in compliance with a processing content, a performance and the like of the image processing device 22, there is determined to what degree the luminance of the driver image is ensured by removing the disturbance light and, by coinciding with it, there are adjusted the number of the LEDs used in the illumination 31, the lit time of the illumination 31, a duty ratio which is a ratio between the lit time and the extinguished time of the illumination 31, and the like.

Incidentally, in this case, it is necessary to consider a decrease in the illumination light by the polarizing filters 32, 34. Concretely, since the light quantity reaching to the subject becomes about 1/2 by the polarizing filter 32 and the light quantity returning to the image pickup device 21 becomes about 1/2 by the polarizing filter 34, it is necessary to consider the fact that the illumination light emitted from the illumination 31 enters to the image pickup element 43 while being attenuated to about 1/4.

Next, by referring to Fig. 16, there are explained about examples of relations, in the processings in the steps S1 to S4, between [a frame period and a shutter release time of the image pickup device 21] and [a lit time of the illumination 31].

In a case where the frame period of the image pickup device 21 was made 16.5 millisecond, e.g., the shutter release time, i.e., the exposure time, of the image pickup device 21 is set to 0.3 millisecond for every frame. The illumination 31 is pulse-lit by a term which is the same as a term in which the shutter of the image pickup device 21 is released for every two frames. That is, there is controlled such that a term in which the illumination 31 is lit synchronizes with a term in which the image pickup element 43 is exposed. Accordingly, the illumination 31 is lit by 0.3 millisecond for every two frames, and the duty ratio becomes about 1% (≈ 0.3 millisecond ÷ 33 millisecond).

Incidentally, it is unnecessary that the term releasing the shutter of the image pickup device 21 is set not always in a forefront of each frame, and there may be made so as to be set in a midway or a tail of each frame. Further, there may be made such that, in the frame (hereafter, called a lit frame as well) in which the illumination 31 is lit and the frame (hereafter, called an extinguished frame) in which the illumination 31 is not lit, a timing releasing the shutter is altered. If a quality of the differential image is considered, the shorter an interval between a shutter release term in the lit frame, which is shown by an arrow A1, and a shutter release term in the extinguished frame is, the smaller a change in a state of the disturbance light or the driver 12 becomes, and it is advantageous. However, if the term shown by the arrow A1 is too short, since there is a case where the illumination light 31 or the processing in the image pickup element 43 does not become in time, it is necessary to consider that point.

Further, in a case where the light quantity is insufficient, and the like, there maybe made so as to apply such a countermeasure that the lit time of the illumination 31 and the shutter release time of the image pickup section 35 are automatically adjusted or a correction of the driver image is performed.

Additionally, there may be made such that the lit time of the illumination 31 and the shutter release time of the image pickup section 35 are automatically adjusted by detecting the state of the disturbance light, the brightness of circumference, the weather, an opening/closing of window glass, a present time instant, and the like. Incidentally, there may be made such that the time releasing the shutter in the lit frame and the time releasing the shutter in the extinguished frame are individually controlled. That is, there may be made such that the shutter release time in the lit frame and the shutter release time in the extinguished frame are set to different values.

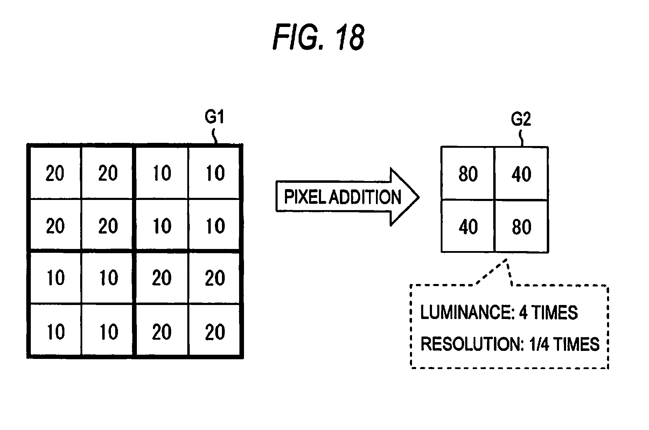

Returning to Fig. 14, in a step S5, the pixel addition section 52 performs a pixel addition processing. Here, by referring to Fig. 18, there is explained about the pixel addition processing. An image G1 in a left side of Fig. 18 shows an example of the image in a region of 8 x 8 pixels within the driver image. Each cell in the image G1 shows the pixel, and a numerical value in the cell shows a pixel value.

In the pixel addition processing, e.g., this image G1 is divided into four regions of 2 x 2 pixels and, by adding the pixel value in each region, there is generated an image G2 of 2 x 2 pixels. Accordingly, in comparison with the image G1, the image G2 becomes 1/4 in its resolution, whereas the luminance of each pixel becomes 4 times.

In the pixel addition processing, the processing like this is performed over the whole region of the driver image. That is, the driver image is divided into regions of a predetermined size, and there is generated an image (hereafter, called a pixel addition image as well) comprising the pixels in which the pixel value within the divided region is added. By this, it is possible to increase the luminance of the driver image.

Incidentally, the size of the region dividing the driver image in the pixel addition processing is set in compliance with the resolution, of the driver image, which is required in the image processing in the image processing device 22 in the post-stage.

The pixel addition section 52 applies the pixel addition processing to both of the driver image in the lit frame, which was image-picked-up in the step S2, and the driver image in the extinguished frame, which was image-picked-up in the step S3, thereby supplying the two generated pixel addition images to the differential image generating section 53.

In a step S6, there is taken the differential image generating section 53 takes a difference between the images at the lit time and the extinguished time of the illumination 31. That is, by taking the difference between the pixel addition image of the lit frame and the pixel addition image of the extinguished frame, the differential image generating section 53 generates the differential image.

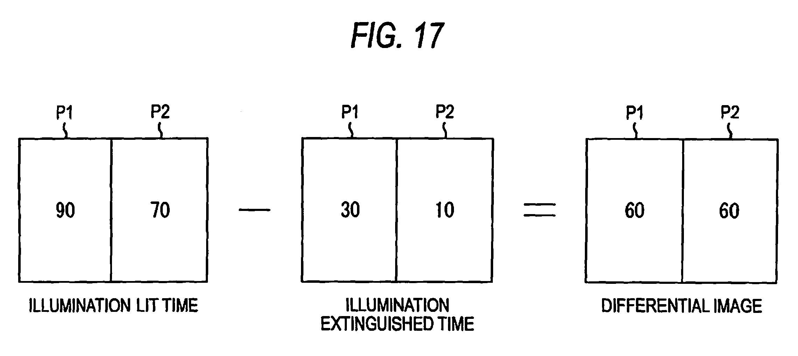

For example, as shown in Fig. 17, in a case where the pixel value of a pixel P1 of the pixel addition image at an illumination lit time (the lit frame) is 90 and the pixel value of a pixel P2 is 70, and the pixel value of the pixel P1 of the pixel addition image at an illumination extinguished time (the extinguished frame) is 30 and the pixel value of the pixel P2 is 10, the pixel values of the pixels P1 and P2 of the differential image together become 60.

By the way, a state (the light quantity and a distribution) of the light irradiated to the driver 12 when the illumination 31 is being lit is denoted by an expression (1) below.

State of light at illumination lit time = State of disturbance light at illumination lit time + State of illumination light of illumination 31 ... (1)

On the other hand, a state of the light irradiated to the driver 12 when the illumination is being extinguished is denoted by an expression (2) below.

State of light at illumination extinguished time = State of disturbance light at illumination extinguished time ... (2)

Here, if a difference between time instants, in which there were performed the image pickups of the driver image of the lit frame and the driver image of the extinguished frame, is very little, it is possible to consider that a state of the disturbance light, i.e., the light quantity and the distribution of the disturbance light, is approximately the same, and there applies an approximate expression of an expression (3) below.

State of disturbance light at illumination lit time ≈ State of disturbance light at illumination extinguished time ... (3)

Accordingly, by subtracting the expression (2) from the expression (1) and substituting the expression (3), a state of the light in the differential image is denoted by an expression (4) below.

State of light in differential image ≈ State of illumination light of illumination 31 ... (4)

Here, since the illumination light of the illumination 31 is approximately, uniformly irradiated to the face of the driver 12, the differential image becomes an image which is suitable for the processing in the image processing device 22, from which the light spot of the face of the driver 12 is removed, and in which the shadow is little.

The differential image generating section 53 supplies the generated differential image to the image processing device 22.

In a step S7, the image processing device 22 performs an image processing. That is, the image processing device 22 implements a predetermined monitoring processing by performing a predetermined image processing to the differential image. The image processing device 22 outputs its result to the post-stage device.

In a step S8, the monitoring system 11 judges whether the processing ends. In a case where it is judged that the processing does not end, the processing returns to the step S1, and the processings in the steps S1 to S8 are repeatedly implemented till it is judged in the step S8 that the processing ends.

On the other hand, e.g., when the engine of own vehicle is stopped, the monitoring system 11 judges in the step S8 that the processing ends, and the monitoring processing ends.

By doing like this, it is possible to obtain the image, in which the shadow of the drive' s face is certainly suppressed, while suppressing the increase in the size and the electric power consumption of the illumination 31, so that it is possible to improve the quality of the image processing.

Incidentally, in a case where the light quantity of the illumination 31 is sufficient and the shadow of the driver's face is sufficiently removed in the driver image of the lit frame, there may be made such that the driver image of the lit frame is made an object of the image processing, e.g., by omitting the processings of the steps S4 to S6.

Further, in a case where the luminance of the driver image is sufficient, there may be made, e.g., such that the pixel addition processing in a step S5 is omitted and, in the step S6, there is taken the difference between the driver image of the lit frame and the driver image of the extinguished frame.

Additionally, in the above explanation, although there is explained about the processing in the case image-picking-up the driver, the present invention can be applied also to a case image-picking-up a rider other than the driver.

Further, in the above explanation, although there is shown the example in which the peak wavelength of the illumination light of the illumination 31 and the center wavelength of the infrared BPF 42 are made 940 nm, there may be made such that the peak wavelength of the illumination light of the illumination 31 and the center wavelength of the infrared BPF 42 are set to other wavelength in the infrared region in which the intensity (the spectral irradiance) of the sunlight becomes a predetermined threshold value or less and a minimum in the spectrum of the sunlight, or a wavelength (e.g., near 1120 - 1140 nm, near 1400 nm, and the like) in the vicinity of the former.

Additionally, it is also possible to replace the order of the pixel addition processing in the step S5 in Fig. 14 and a differential processing in the step S6.

Further, the above-mentioned series of processings can be implemented by a hardware, or can be implemented by a software as well.

Additionally, in the present specification, the term of the system is made one meaning an overall device constituted by plural units and means, and the like.

The embodiment of the present invention is not one limited to the above-mentioned embodiment, and various modifications are possible in a scope not deviating from a gist of the present invention.

## Claims

**1.** An image pickup device comprising:

a filter transmitting, among components of an entering light, a component near a wavelength of a peak of an illumination light irradiated to a subject, the wavelength being a wavelength in an infrared region in which an intensity of a sunlight becomes a predetermined threshold value or less and a minimum, or a wavelength near the former,
an image pickup means image-picking-up the light which transmitted through the filter, and
a synchronous control means pulse-lighting the illumination light, and controlling such that a term in which the illumination light is lit synchronizes with a term in which the image pickup means is exposed.

**2.** An image pickup device according to claim 1, wherein the illumination light is an infrared light in which a wavelength longer than 935 nm in the vicinity of 935 nm is made the peak.

**3.** An image pickup device according to claim 1, wherein the synchronous control means additionally controls the image pickup means so as to image-pick-up alternately an image at a lit time of the illumination light and an image at an extinguished time, and
includes additionally a differential image generating means generating a differential image which is a difference between the image at the lit time of the illumination light and the image at the extinguished time.

**4.** An image pickup device according to claim 1, which further comprises a pixel addition means dividing an image-picked-up image into regions of a predetermined size, and generating an image including a pixel in which there is added a pixel value of a pixel in the region.

**5.** An image pickup device according to claim 1, which further comprising:

an illumination irradiating the illumination light,
a first polarizing means polarizing the illumination light irradiated to the subject, in a first direction, and

a second polarizing means polarizing a light entering to the image pickup means, in a second direction approximately, perpendicularly intersecting with the first direction.

**6.** An image pickup control method in an image pickup device including a filter transmitting, among components of an entering light, a component near a wavelength of a peak of an illumination light irradiated to a subject, the wavelength being a wavelength in an infrared region in which an intensity of a sunlight becomes a predetermined threshold value or less and a minimum, or a wavelength near the former, and an image pickup means image-picking-up the light which transmitted through the filter, the method comprising:

a synchronous control step pulse-lighting the illumination light, and controlling such that a term in which the illumination light is lit synchronizes with a term in which the image pickup means is exposed.

12
DRIVER

FIG. 1

11
MONITORING SYSTEM
21
IMAGE PICKUP DEVICE
22
IMAGE PROCESSING DEVICE
31
32
33
34
35
IMAGE PICKUP SECTION
41
42
43
44
CONTROL SECTION
51
SYNCHRONOUS CONTROL SECTION
52
PIXEL ADDITION SECTION
53
DIFFERENTIAL IMAGE GENERATING SECTION

FIG. 2
101
102
103
SPECTRAL IRRADIANCE [μW/cm²/nm]
90
80
70
60
50
40
30
20
10
0
400
500
600
700
800
WAVELENGTH [nm]

SPECTRAL IRRADIANCE [μW/cm2/nm]
1.2
1.0
0.8
0.6
0.4
0.2
0
400
500
600
700
800
WAVELENGTH [nm]
111
112
113
114
115
116

*FIG. 3*

FIG. 4
131
132
SPECTRAL IRRADIANCE [μW/cm2/nm]
0
30
60
90
120
150
900
910
920
930
940
950
960
970
980
990
1000
WAVELENGTH [nm]

FIG. 5

SOLAR POWER [μW/cm2]
1800
1600
1400
1200
1000
800
600
400
200
0
CENTER WAVELENGTH [nm]
900
905
910
915
920
925
930
935
940
945
950
955
960
965
970
975
980
HALF VALUE BREADTH [nm]
14
28
42

SOLAR POWER [μW/cm2]
2000
1800
1600
1400
1200
1000
800
600
400
200
0
900
910
920
930
940
950
960
970
980
CENTER WAVELENGTH [nm]
141
142
143


FIG. 6

FIG. 7

SOLAR POWER [μW/cm2]
0
200
400
600
800
1000
1200
1400
1600
1800
CENTER WAVELENGTH [nm]
900
905
910
915
920
925
930
935
940
945
950
955
960
965
970
975
980
HALF VALUE BREADTH [nm]
14
28
42

FIG. 8
SOLAR POWER [μW/cm2]
2000
1800
1600
1400
1200
1000
800
600
400
200
0
900
910
920
930
940
950
960
970
980
CENTER WAVELENGTH [nm]
151
152
153

FIG. 9
TRANSMITTANCE OF INFRARED BPF
1
0.9
0.8
0.7
0.6
0.5
0.4
0.3
0.2
0.1
0
SOLAR POWER [μW/cm2]
1000
900
800
700
600
500
400
300
200
100
0
800
850
900
950
1000
1050
1100
WAVELENGTH [nm]
161
162
163

34
32
201

FIG. 10

FIG. 11
210
POLARIZED LIGHT IN A-DIRECTION IS INTERRUPTED
POLARIZED LIGHT IN A-DIRECTION IS REFLECTED
DIFFUSED REFLEX
POLARIZED LIGHT IN A-DIRECTION IS IRRADIATED
POLARIZED LIGHT IN A-DIRECTION IS TRANSMITTED
34
32
DIFFUSED REFLEX LIGHT IS POLARIZED IN B-DIRECTION
NON-POLARIZED LIGHT
35
31

TRANSMITTANCE
1
0.9
0.8
0.7
0.6
0.5
0.4
0.3
0.2
0.1
0
800
850
900
950
1000
1050
1100
WAVELENGTH [nm]

FIG. 12

FIG. 13
44
21
43
42
261
41
252
252A
251L
31
251R
32L
34
32R
33

FIG. 14

MONITORING PROCESSING IS STARTED
ILLUMINATION IS LIT
S1
IMAGE-PICKED-UP
S2
ILLUMINATION IS EXTINGUISHED
S3
IMAGE-PICKED-UP
S4
PIXEL ADDITION PROCESSING IS PERFORMED
S5
DIFFERENCE IN IMAGE BETWEEN LIT TIME AND EXTINGUISHED TIME OF ILLUMINATION IS TAKEN
S6
IMAGE PROCESSING IS PERFORMED
S7
S8
NO
PROCESSING ENDS?
YES
END

FIG. 15
CASE 1
FRAME PERIOD
DRIVE ELECTRIC CURRENT 100%
(DISTURBANCE LIGHT) : (ILLUMINATION LIGHT) = 1 : 1
ELECTRIC POWER CONSUMPTION 1
RECEIVED LIGHT QUANTITY 1
EXPOSURE TIME 100%
CASE 2
DRIVE ELECTRIC CURRENT 300%
(DISTURBANCE LIGHT) : (ILLUMINATION LIGHT) = 1 : 3
ELECTRIC POWER CONSUMPTION 0.3
RECEIVED LIGHT QUANTITY 0.4
EXPOSURE TIME 10%
CASE 3
DRIVE ELECTRIC CURRENT 1000%
(DISTURBANCE LIGHT) : (ILLUMINATION LIGHT) = 1 : 10
ELECTRIC POWER CONSUMPTION 0.1
RECEIVED LIGHT QUANTITY 0.11
EXPOSURE TIME 1%

FIG. 16

FRAME PERIOD
SHUTTER RELEASE TIME
LIT TIME
16.5msec
16.5msec
0.3msec
0.3msec
0.3msec
A1
IMAGE AT ILLUMINATION
LIT TIME
IMAGE AT ILLUMINATION
EXTINGUISHED TIME

FIG. 17
P1
P2
90
70
ILLUMINATION LIT TIME
−
P1
P2
30
10
ILLUMINATION EXTINGUISHED TIME
=
P1
P2
60
60
DIFFERENTIAL IMAGE

FIG. 18

G1
20
20
10
10
20
20
10
10
10
10
20
20
10
10
20
20
PIXEL ADDITION
G2
80
40
40
80
LUMINANCE: 4 TIMES
RESOLUTION: 1/4 TIMES

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000028315 A